Europäisches Patentamt

European Patent Office

Office européen des brevets

(19)

(11) Numéro de publication: **0 051 513**

**A1**

(12) ## DEMANDE DE BREVET EUROPEEN

(21) Numéro de dépôt: **81401608.5**

(22) Date de dépôt: **15.10.81**

(51) Int. Cl.³: **B 60 N 1/08**

(30) Priorité: **05.11.80 FR 8023569**

(43) Date de publication de la demande:
**12.05.82 Bulletin 82/19**

(84) Etats contractants désignés:
**DE GB IT SE**

(71) Demandeur: **COMPAGNIE INDUSTRIELLE DE MECANISMES en abrégé C.I.M. Société dite:**
**6, Rue Barbès**
**F-92302 Levallois Perret(FR)**

(72) Inventeur: **Parizet, Roger**
**Route des Bordes**
**F-45460 Bonnee(FR)**

(74) Mandataire: **Bressand, Georges et al,**
**c/o CABINET LAVOIX 2 Place d'Estienne d'Orves**
**F-75441 Paris Cedex 09(FR)**

(54) **Profilé pour glissière de correction d'assiette de siège, son procédé de fabrication et glissière en comportant application.**

(57) Le profilé inférieur (2) de la glissière de correction d'assiette est réalisé par pliage en U d'un flan en forme de diabolo dans lequel sont emboutis des rebords d'extrémité (14) et les rainures latérales de guidage courbes (10) et qui est percé des fenêtres (13) destinées à recevoir le verrou. L'âme plane (11) de ce profilé se fixe directement sur celle (3) du profilé supérieur (1) de la glissière de réglage longitudinal du siège.

Application aux sièges de véhicule automobile.

FIG.1

1

Profilé pour glissière de correction d'assiette
de siège, son procédé de fabrication et glissière en
comportant application.

---

La présente invention est relative aux profilés
pour glissières de correction d'assiette destinées à
supporter des sièges, notamment des sièges de véhicule
automobile, du type présentant une section en forme
générale de U dont l'âme à une largeur constante et
délimitant au moins un chemin de guidage latéral courbe.
Ces profilés sont généralement combinés par emboîtement
avec un autre profilé analogue, avec interposition
d'éléments de roulement ou de glissement tels que des
billes, pour constituer des glissières.

Jusqu'à présent, pour réaliser de tels profilés,
la technique a consisté à partir d'un profilé droit
ayant la forme désirée en section, et à cambrer ou
cintrer ce profilé de façon à donner au chemin de
guidage la courbe voulue.

Cette technique présente de nombreux inconvénients.
En particulier, le profilé cintré doit être fixé à sa
structure de support, qui est généralement soit le siège
lui-même, soit une glissière rectiligne de réglage
longitudinal de la position du siège, au moyen de ferrures ou étriers avant et arrière en forme de U. Pour des
raisons d'économie et pour permettre le démontage, ces
étriers sont boulonnés d'un côté et soudés de l'autre.
En cas de choc, les étriers travaillent à la flexion, et
le risque de déformation de ceux-ci et de rupture des
soudures est élevé, surtout lorsque la ceinture de sécurité est fixée directement au siège. A ceci s'ajoutent
d'une part les difficultés de fabrication liées à l'opération de cintrage et à l'augmentation du nombre de
pièces du soubassement du siège, et d'autre part la
nécessité de reprendre les encoches de verrouillage
après cintrage, du fait de leur déformation consécutive à ce cintrage.

L'invention a pour but de fournir un profilé pour glissière de correction d'assiette plus économique et plus fiable. A cet effet, elle a pour objet un profilé du type précité, caractérisé en ce que l'âme du profilé est plane.

Dans des modes de réalisation avantageux :
- le profilé comporte dans l'une au moins de ses joues latérales une série de fenêtres d'orientation générale perpendiculaire à l'axe du chemin de guidage;
- les joues latérales se terminent par des rebords longitudinaux rabattus à angle droit vers l'intérieur du profilé;
- l'âme comporte des trous de boulons.

L'invention a également pour objet un procédé de fabrication d'un tel profilé. Suivant ce procédé, on réalise un flan plan en forme générale de diabolo muni du chemin de guidage et éventuellement des fenêtres, des rebords et/ou des trous de boulons, et on replie les deux régions latérales de ce flan à angle droit le long de deux lignes de pliage longitudinales parallèles.

L'invention a aussi pour objet une glissière de correction d'assiette comprenant deux profilés emboîtés dont l'un au moins est tel que défini ci-dessus.

L'invention est exposée ci-après plus en détail à l'aide des dessins annexés, qui en représentent seule- . ment un mode d'exécution. Sur ces dessins:

la Fig. 1 est une vue en élévation latérale d'une partie d'un soubassement de siège comprenant un profilé conforme à l'invention;

la Fig. 2 est une vue en bout de l'objet de la Fig. 1, prise suivant la flèche 2 de la Fig. 1;

la Fig. 3 est une vue en plan d'un flan de tôle servant à réaliser un profilé suivant l'invention;

la Fig. 4 est une vue en bout de ce flan, suivant

3

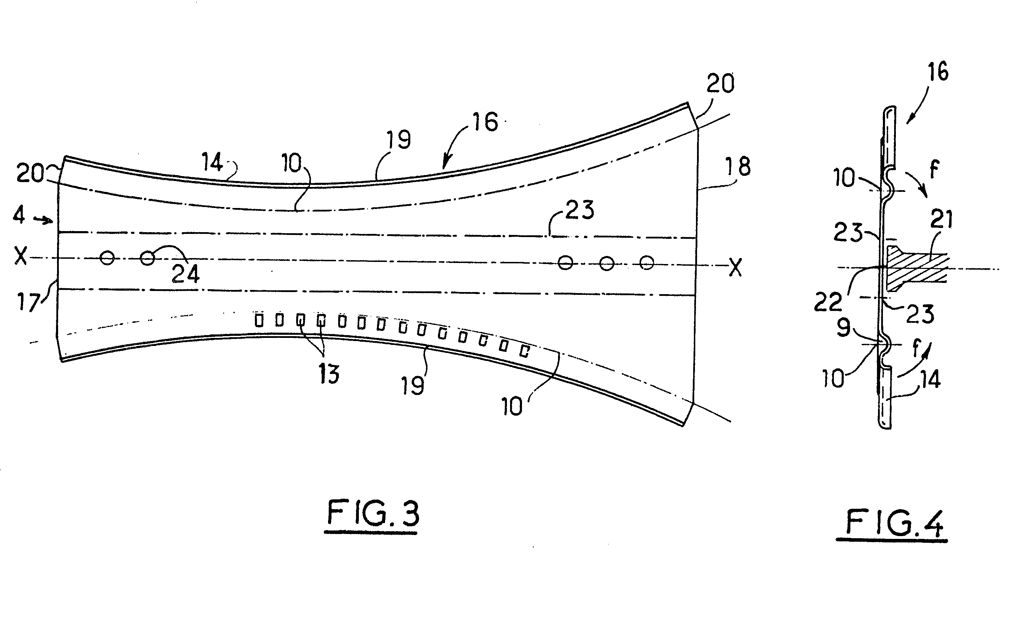

la flèche 4 de la Fig. 3, qui illustre l'opération de pliage.

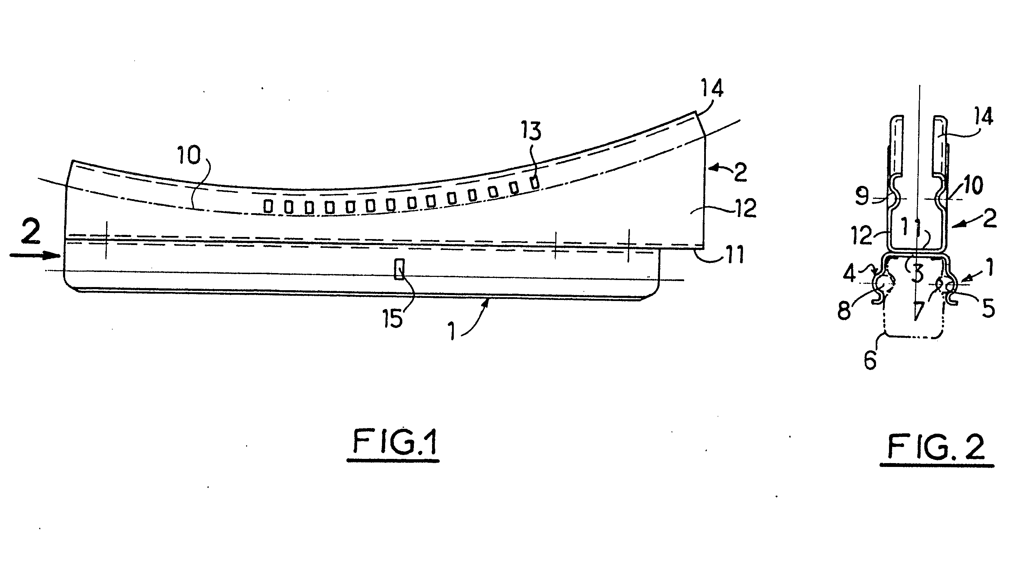

Les Fig. 1 et 2 représentent deux profilés métalliques fixés l'un sur l'autre : un profilé inférieur 1, qui constitue le profilé extérieur d'une glissière rectiligne de réglage longitudinal d'un siège de véhicule (non représenté), et un profilé supérieur 2, qui constitue le profilé intérieur d'une glissière de correction d'assiette.

Le profilé 1 a une section en forme générale de U renversé comportant une âme centrale 3 plane et de largeur constante et deux branches latérales 4 dirigées vers le bas. Chaque branche 4 présente une rainure longitudinale 5 tournée vers l'intérieur du profilé 1, les deux rainures 5 se faisant face. Comme représenté schématiquement en traits mixtes à la Fig. 2, le profilé 1 est destiné à s'emboîter sur un autre profilé rectiligne 6 à section en U droit, les branches de ce U présentant chacune une rainure 7 ouverte vers l'extérieur en regard d'une rainure 5. Les rainures 5 et 7 définissent ensemble deux chemins de roulement pour des billes 8, et l'âme du profilé 6 est destinée à être fixée au plancher d'un véhicule automobile.

Le profilé supérieur 2 a également sur toute sa longueur une section en U droit, mais la hauteur des branches de ce U varie suivant sa longueur; à partir d'une extrémité, cette hauteur décroît à peu près jusqu'à mi-longueur, puis croît. Dans chaque section du profilé 2, chaque branche du U présente un évidement 9 ouvert vers l'extérieur, les deux évidements 9 étant au même niveau. L'ensemble des évidements 9 constitue de chaque côté une rainure longitudinale courbe ouverte vers l'extérieur dont l'axe 10 a été représenté en trait mixte sur la Fig. 1 et qui présente un profil longitudinal en arc de cercle à concavité tournée vers le haut.

4

Le profilé 2 a ainsi une âme inférieure 11 plane,
de largeur constante égale·à celle du profilé 1, et
deux joues latérales 12 d'orientation générale verticale. Au-dessus de l'axe 10, chaque joue 12 est pourvue
d'une série de fenêtres 13 à peu près rectangulaires.
Les bords inférieurs de toutes ces fenêtres sont disposés
à une même distance au-dessus de l'axe 10, et leurs
grands axes sont tous orientés vers le centre du cercle
correspondant. Les joues 12 se terminent par un rebord
supérieur 14 rabattu à angle droit vers l'intérieur du
profilé 2.

L'âme 11 est appliquée sur l'âme 3 du profilé 1
et est fixée à celle-ci en autant de points que nécessaire, par exemple par boulonnage pour permettre l'utilisation de la glissière rectiligne 1-6 seule en vue de
supporter un siège à assiette non réglable. Le profilé
2 est destiné à coopérer avec un autre profilé (non
représenté) emboîté sur lui et présentant deux rainures
de même axe 10 que les siennes mais ouvertes vers l'intérieur, l'ensemble des quatre rainures délimitant deux
chemins de roulement courbes pour des billes non représentées. Ce profilé extérieur présente une section en U
inversé, et son âme est destinée à être fixée sous le
siège à supporter. Le mouvement du profilé extérieur
le long du profilé 2 modifie l'assiette du siège par
rotation de celui-ci autour de l'axe horizontal commun
des deux arcs de cercle 10.

On prévoit normalement deux ensembles de quatre
profilés tels que définis ci-dessus pour constituer un
soubassement de siège, avec un ensemble de chaque côté
du siège. Chaque ensemble comporte encore deux mécanismes de verrouillage : pour le réglage longitudinal,
un verrou (non représenté) traverse une fenêtre latérale
15 du profilé 1 et pénètre, lorsqu'il est relâché, dans
l'une d'une série de fenêtres latérales (non représentées) du profilé 6. De même, pour le réglage de l'assiette, un verrou (non représenté) traverse une fenêtre du profilé extérieur de correction d'assiette et pénètre, lorsqu'il est relâché, dans l'une des fenêtres 13 du profilé 2 associé. Les rebords 14 s'insèrent entre l'âme du profilé extérieur et une réglette longitudinale soudée sur la face intérieure de cette âme.

Le profilé 2 est réalisé à partir d'un flan de tôle 16 représenté aux Fig. 3 et 4. Ce flan, vu en plan (Fig.3), a une forme générale en diabolo symétrique par rapport à un axe longitudinal de symétrie générale X-X : il possède deux côtés d'extrémité 17, 18 perpendiculaires à l'axe X-X (le côté arrière 18 étant dans cet exemple un peu plus long que le côté 17), et deux côtés latéraux concaves 19 en arc de cercle.

Le flan 16 est à peu près plan. Toutefois, il possède déjà les deux rainures courbes d'axes 10 ainsi que les rebords rabattus 14, lesquels s'étendent le long des côtés 19. Ces reliefs sont obtenus par emboutissage de la tôle plane de départ. Il est à noter qu'à partir de chaque axe 10 et vers l'extérieur, les côtés 17,18 possèdent une partie 20 d'orientation radiale par rapport à cet axe. Les fenêtres 13 sont percées au préalable le long d'un axe 10, avec leur forme et leur orientation radiale définitive par rapport à cet axe.

Au moyen d'un poinçon 21 à surface active 22 rectangulaire, représenté à la Fig. 4, et d'une matrice conjuguée non représentée, on plie le flan 16 le long de deux lignes de pliage longitudinales 23 parallèles à l'axe X-X, suivant les flèches f de la Fig. 4, ce qui conduit directement au profilé 2 des Fig. 1 et 2. On a représenté à la Fig. 3 des trous de boulons 24 percés au préalable dans le flan 16 le long de l'axe X-X.

Ainsi, le profilé 2 est réalisé, à partir d'une tôle plane, par emboutissage (rainures courbes et

6

rebords 14) puis pliage, sans qu'aucun cintrage soit nécessaire. Il se fixe directement à un support plan tel que l'âme 3 du profilé 1, sans organe intermédiaire travaillant à la flexion et, si on désire l'amovibilité, sans soudure, ce qui rend l'assemblage très fiable en cas de choc. De plus, l'excédent de tôle des joues latérales 12 du profilé 2 n'augmente pas le poids du soubassement et même le diminue, car le poids de cet excédent n'est pas supérieur à celui des deux étriers, nécessairement de forte épaisseur, utilisés dans la technique antérieure rappelée plus haut.

Il faut encore noter que grâce à l'absence de déformation des fenêtres 13, le verrouillage de la glissière dans la position choisie s'opère sans jeu ni coincement.

Bien entendu, le profilé extérieur de la glissière de correction d'assiette peut être constitué et réalisé de la même façon que le profilé 2, ce qui permet là encore de se passer de tout organe de fixation intermédiaire entre ce profilé et le siège, d'améliorer la fiabilité de cette fixation, de gagner un peu de légèreté et d'éviter l'opération de cambrage.

7

REVENDICATIONS

1. Profilé de correction d'assiette de siège, notamment de siège de véhicule, du type présentant une section en forme générale de U dont l'âme a une largeur constante et délimitant au moins un chemin de guidage latéral courbe, caractérisé en ce que l'âme (11) du profilé est plane.

2. Profilé suivant la revendication 1, caractérisé en ce qu'il comporte dans l'une au moins de ses joues latérales (12) une série de fenêtres (13) d'orientation générale perpendiculaire à l'axe (10) du chemin de guidage.

3. Profilé suivant l'une des revendications 1 et 2, caractérisé en ce que ses joues latérales (12) se terminent par des rebords longitudinaux (14) rabattus à angle droit vers l'intérieur du profilé (2).

4. Profilé suivant l'une quelconque des revendications 1 à 3, caractérisé en ce que le chemin de guidage est ouvert vers l'extérieur.

5. Profilé suivant l'une quelconque des revendications 1 à 4, caractérisé en ce que l'âme (11) comporte des trous de boulons (24).

6. Procédé de fabrication d'un profilé suivant l'une quelconque des revendications 1 à 5, caractérisé en ce qu'on réalise un flan plan (16) en forme générale de diabolo muni du chemin de guidage et éventuellement des fenêtres (13), des rebords (14) et/ou des trous de boulons (24), et on replie les deux régions latérales (12) de ce flan à angle droit le long de deux lignes de pliage longitudinales parallèles (23).

7. Glissière de correction d'assiette, du type comprenant deux profilés emboîtés délimitant ensemble au moins un chemin de guidage latéral courbe pour des éléments de roulement ou de glissement, caractérisée en ce que l'un au moins (2) des deux profilés est conforme à l'une quelconque des revendications 1 à 5.

FIG.1

FIG. 2

FIG.3

FIG.4

0051513

Office européen
des brevets

**RAPPORT DE RECHERCHE EUROPEENNE**

Numéro de la demande

EP 81 40 1608

| Catégorie | Citation du document avec indication, en cas de besoin, des parties pertinentes | Revendication concernée | CLASSEMENT DE LA DEMANDE (Int. Cl.³) |
|---|---|---|---|
| X | <u>GB - A - 510 055</u> (TUBAUTO)<br><br>* en entier; figures 2,3 * | 1,2,3,<br>4,7 | B 60 N 1/08 |
| | <u>BE - A - 454 798</u> (TUBAUTO)<br><br>* page 2, lignes 38-57; page 3, lignes 1-15; figures 1,4,5 * | 1 | |
| | <u>FR - A - 2 437 954</u> (RENAULT)<br><br>* en entier; figures 1,2,3 * | 1,2,4<br>5,7 | **DOMAINES TECHNIQUES RECHERCHES** (Int. Cl.³)<br><br>B 21 D<br>B 60 N<br>A 47 C |
| | <u>US - A - 3 357 736</u> (J.J. McCARTHY)<br><br>* figure 7 * | 1,3 | |
| | <u>US - A - 3 802 246</u> (OTIS WARD GOFF)<br><br>* colonne 1, lignes 7-11; colonne 5, lignes 10-12; figure 6 * | 1,6 | |

**DOCUMENTS CONSIDERES COMME PERTINENTS**

-----

CATEGORIE DES DOCUMENTS CITES

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 21-12-1981 | CAPRARI |

OEB Form 1503.1 06.78